# EUROPEAN PATENT APPLICATION

(11) **EP 4 811 742 A2**
(43) Date of publication of application: **23.09.2026**
(21) Application number: 26197386.1
(22) Date of filing: 02.03.2023
(51) Int. Cl.: H04L 41/5003

(54) **METHODS, ARCHITECTURES, APPARATUSES AND SYSTEMS FOR MULTI-MODAL COMMUNICATION INCLUDING MULTIPLE USER DEVICES**

(30) Priority: 03.03.2022 EP 22159873
(62) Document number(s) of the earlier application(s) in accordance with Art. 76 EPC: 23713209.7 / 4 487 593
(71) Applicant: InterDigital Patent Holdings, Inc., Wilmington, DE 19809 (US)
(72) Inventor: COGALAN, Tezcan, LONDON, SW20 8JX (GB); CONCEICAO, Filipe, LONDON, NW1 9JJ (GB); MOURAD, Alain, ASCOT, SL5 9PA (GB); OLVERA-HERNANDEZ, Ulises, SAINT-LAZARE, J7T 0R2 (CA)
(74) Representative: Interdigital

(57) **Abstract**

Procedures, methods, architectures, apparatuses, systems, devices, and computer program products for multi-modal communication including multiple user devices are described. A network node receives a first request for a first set of network slices requested by a first Wireless Transmit/Receive Unit, WTRU, the first request associated with a service identifier, receives a second request for a second set of network slices requested by a second WTRU, the second request associated with the service identifier, wherein the first and second sets of network slices collectively comprise at least two different types of network slices, determines a set of instances corresponding to the requested network slices, and transmits, to at least one further network node, information indicative of the instances respectively corresponding to the network slices of the first and second sets of network slices.

## Description

### BACKGROUND

The present disclosure is generally directed to the fields of communications, software and encoding, including, for example, to methods, architectures, apparatuses, systems directed to multi-modal communication including multiple user devices.

### SUMMARY

In a first aspect, the present principles are directed to a method performed by a network node that receives a first request for a first set of network slices requested by a first Wireless Transmit/Receive Unit, WTRU, the first request associated with a service identifier, receives a second request for a second set of network slices requested by a second WTRU, the second request associated with the service identifier, wherein the first and second sets of network slices collectively comprise at least two different types of network slices, determines a set of instances corresponding to the requested network slices, and transmits, to at least one further network node, information indicative of the instances respectively corresponding to the network slices of the first and second sets of network slices.

In a second aspect, the present principles are directed to a network node comprising memory storing processor-executable program instructions and at least one hardware processor configured to execute the program instructions to receive a first request for a first set of network slices requested by a first Wireless Transmit/Receive Unit, WTRU, the first request associated with a service identifier, receive a second request for a second set of network slices requested by a second WTRU, the second request associated with the service identifier, wherein the first and second sets of network slices collectively comprise at least two different types of network slices, determine a set of instances corresponding to the requested network slices, and transmit, to at least one further network node, information indicative of the instances respectively corresponding to the network slices of the first and second sets of network slices.

In a third aspect, the present principles are directed to a wireless transmit/receive unit, WTRU, comprising memory storing processor-executable program instructions and at least one hardware processor configured to execute the program instructions to transmit, to a network node, a first request for a first set of network slices, the first request associated with a service identifier further known to a second WTRU, wherein the first set of network slices comprises at least two different types of network slices, and receive information indicative of instances corresponding to the slices of the first set of network slices.

### BRIEF DESCRIPTION OF THE DRAWINGS

A more detailed understanding may be had from the detailed description below, given by way of example in conjunction with drawings appended hereto. Figures in such drawings, like the detailed description, are examples. As such, the Figures (FIGs.) and the detailed description are not to be considered limiting, and other equally effective examples are possible and likely. Furthermore, like reference numerals ("ref.") in the FIGs. indicate like elements, and wherein:
FIG. 1A is a system diagram illustrating an example communications system;
FIG. 1B is a system diagram illustrating an example wireless transmit/receive unit (WTRU) that may be used within the communications system illustrated in FIG. 1A;
FIG. 1C is a system diagram illustrating an example radio access network (RAN) and an example core network (CN) that may be used within the communications system illustrated in FIG. 1A;
FIG. 1D is a system diagram illustrating a further example RAN and a further example CN that may be used within the communications system illustrated in FIG. 1A;
FIG. 2 illustrates an example use case for augmented robotic telepresence;
FIGS. 3A and 3B illustrate two embodiments for signalling a multi-modal service ID according to the present principles;
FIG. 4 is a message flow diagram illustrating signaling of the multi-modal service ID according to an embodiment;
FIG. 5, made up of FIGS. 5A-5D, is an example sequence flow diagram illustrating a method for coordinating network slices for compound E2E multi-modal service according to an embodiment;
FIG. 6 illustrates an example of UE-slice-multi-modality coordination for the example use case on augmented robotic telepresence illustrated in FIG. 2; and
FIG. 7 is a sequence diagram illustrating a message flow in a network involved in a compound E2E multi-modal service according to an embodiment.

### DETAILED DESCRIPTION

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description. Further, embodiments and examples not specifically described herein may be practiced in lieu of, or in combination with, the embodiments and other examples described, disclosed or otherwise provided explicitly, implicitly and/or inherently (collectively "provided") herein. Although various embodiments are described and/or claimed herein in which an apparatus, system, device, etc. and/or any element thereof carries out an operation, process, algorithm, function, etc. and/or any portion thereof, it is to be understood that any embodiments described and/or claimed herein assume that any apparatus, system, device, etc. and/or any element thereof is configured to carry out any operation, process, algorithm, function, etc. and/or any portion thereof.

### Example Communications System

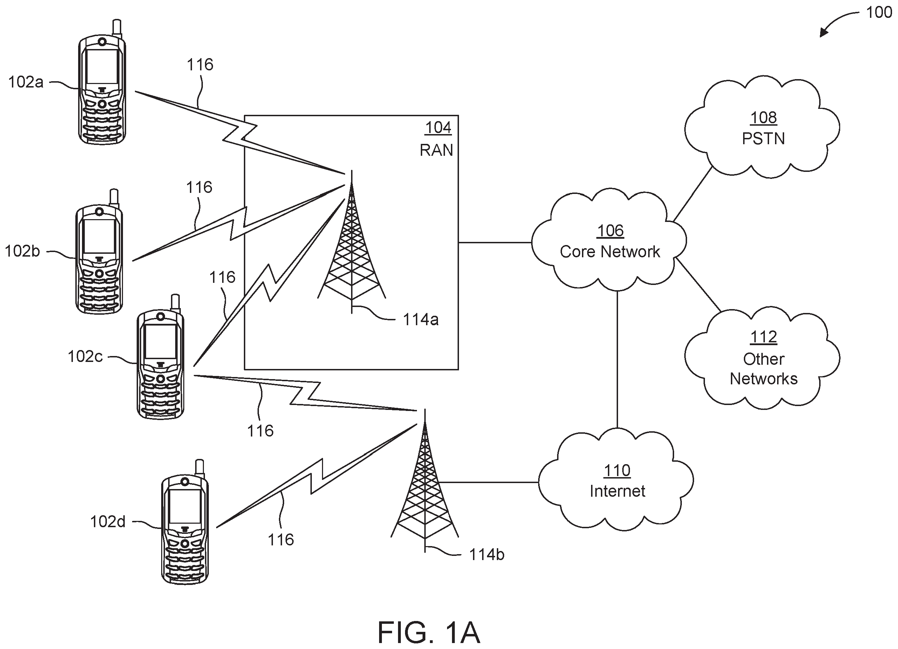

The methods, apparatuses and systems provided herein are well-suited for communications involving both wired and wireless networks. An overview of various types of wireless devices and infrastructure is provided with respect to FIGs. 1A-1D, where various elements of the network may utilize, perform, be arranged in accordance with and/or be adapted and/or configured for the methods, apparatuses and systems provided herein.

FIG. 1A is a system diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail (ZT) unique-word (UW) discreet Fourier transform (DFT) spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104/113, a core network (CN) 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include (or be) a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d, e.g., to facilitate access to one or more communication networks, such as the CN 106/115, the Internet 110, and/or the networks 112. By way of example, the base stations 114a, 114b may be any of a base transceiver station (BTS), a Node-B (NB), an eNode-B (eNB), a Home Node-B (HNB), a Home eNode-B (HeNB), a gNode-B (gNB), a NR Node-B (NR NB), a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in an embodiment, the base station 114a may include three transceivers, i.e., one for each sector of the cell. In an embodiment, the base station 114a may employ multiple-input multiple output (MIMO) technology and may utilize multiple transceivers for each or any sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In an embodiment, the base station 114a and the WTRUs 102a, 102b, 102c may implement radio technologies such as IEEE 802.11 (i.e., Wireless Fidelity (Wi-Fi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node-B, Home eNode-B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In an embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In an embodiment, the base station 114b and the WTRUs 102c, 102d may utilize a cellular-based RAT (e.g., WCDMA, CDMA2000, GSM, LTE, LTE-A, LTE-A Pro, NR, etc.) to establish any of a small cell, picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing an NR radio technology, the CN 106/115 may also be in communication with another RAN (not shown) employing any of a GSM, UMTS, CDMA 2000, WiMAX, E-UTRA, or Wi-Fi radio technology.

The CN 106/115 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/114 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

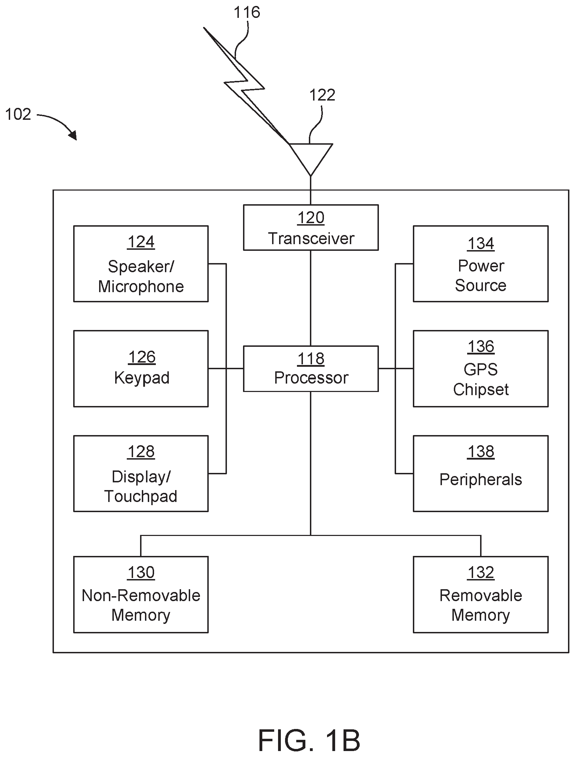

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other elements/peripherals 138, among others. It will be appreciated that the WTRU 102 may include any sub-combination of the foregoing elements while remaining consistent with an embodiment.

The processor 118 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together, e.g., in an electronic package or chip.

The transmit/receive element 122 may be configured to transmit signals to, or receive signals from, a base station (e.g., the base station 114a) over the air interface 116. For example, in an embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In an embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. For example, the WTRU 102 may employ MIMO technology. Thus, in an embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other elements/peripherals 138, which may include one or more software and/or hardware modules/units that provide additional features, functionality and/or wired or wireless connectivity. For example, the elements/peripherals 138 may include an accelerometer, an e-compass, a satellite transceiver, a digital camera (e.g., for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a virtual reality and/or augmented reality (VR/AR) device, an activity tracker, and the like. The elements/peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the uplink (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the uplink (e.g., for transmission) or the downlink (e.g., for reception)).

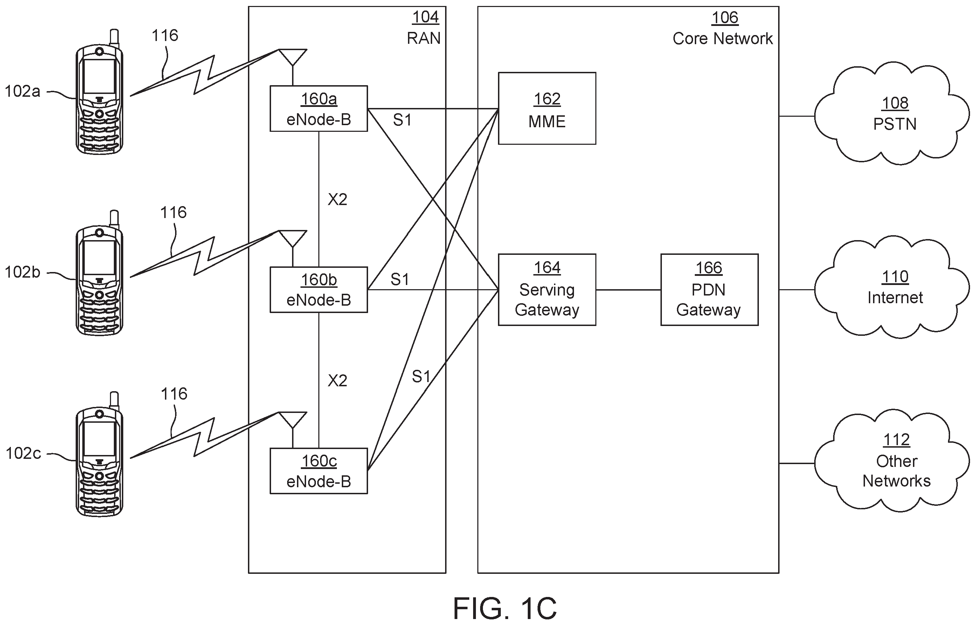

FIG. 1C is a system diagram illustrating the RAN 104 and the CN 106 according to an embodiment. As noted above, the RAN 104 may employ an E-UTRA radio technology to communicate with the WTRUs 102a, 102b, and 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In an embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink (UL) and/or downlink (DL), and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While each of the foregoing elements are depicted as part of the CN 106, it will be appreciated that any one of these elements may be owned and/or operated by an entity other than the CN operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode-Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode-B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGs. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in infrastructure basic service set (BSS) mode may have an access point (AP) for the BSS and one or more stations (STAs) associated with the AP. The AP may have an access or an interface to a distribution system (DS) or another type of wired/wireless network that carries traffic into and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier sense multiple access with collision avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High throughput (HT) STAs may use a 40 MHz wide channel for communication, for example, via a combination of the primary 20 MHz channel with an adjacent or nonadjacent 20 MHz channel to form a 40 MHz wide channel.

Very high throughput (VHT) STAs may support 20 MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse fast fourier transform (IFFT) processing, and time domain processing, may be done on each stream separately. The streams may be mapped on to the two 80 MHz channels, and the data may be transmitted by a transmitting STA. At the receiver of the receiving STA, the above-described operation for the 80+80 configuration may be reversed, and the combined data may be sent to a medium access control (MAC) layer, entity, etc.

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV white space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support meter type control/machine-type communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or network allocation vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

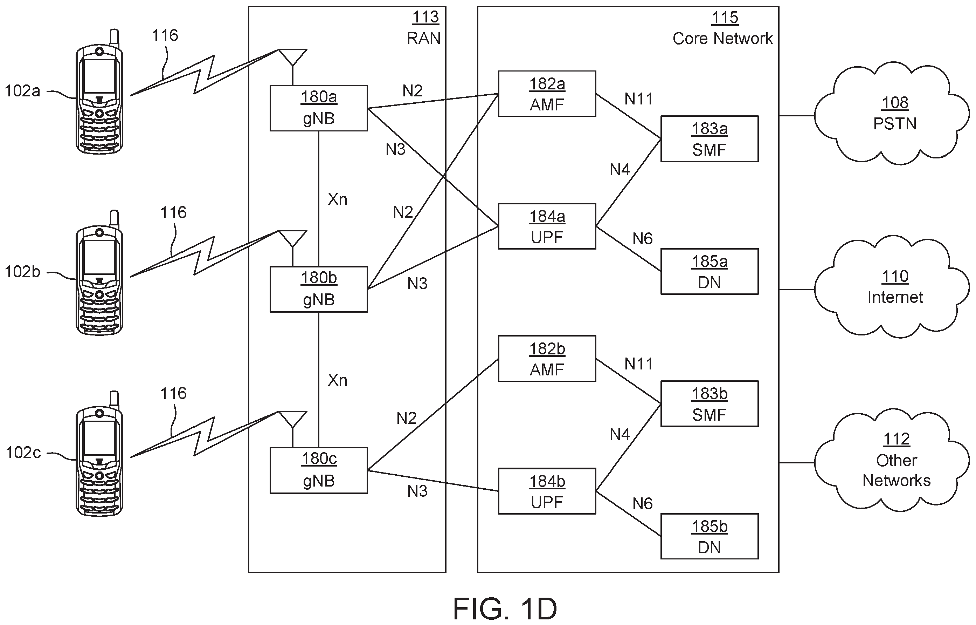

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In an embodiment, the gNBs 180a, 180b, 180c may implement MIMO technology. For example, gNBs 180a, 180b may utilize beamforming to transmit signals to and/or receive signals from the WTRUs 102a, 102b, 102c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., including a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards user plane functions (UPFs) 184a, 184b, routing of control plane information towards access and mobility management functions (AMFs) 182a, 182b, and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one session management function (SMF) 183a, 183b, and at least one Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of NAS signaling, mobility management, and the like. Network slicing may be used by the AMF 182a, 182b, e.g., to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as Wi-Fi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, e.g., to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In an embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to any of: WTRUs 102a-d, base stations 114a-b, eNode-Bs 160a-c, MME 162, SGW 164, PGW 166, gNBs 180a-c, AMFs 182a-b, UPFs 184a-b, SMFs 183a-b, DNs 185a-b, and/or any other element(s)/device(s) described herein, may be performed by one or more emulation elements/devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

### Introduction

### Tactile and Multi-Modality Communication (TACMM)

Tactile and multi-modality communication services enable multi-modality interactions, typically combining ultra-low latency with extremely high throughput, availability and reliability. It can be applied in multiple fields, for example remote human interaction, telesurgery, robot-to-robot interaction, industrial and commercial IoT services, extended reality (XR) and media services or applications. For a tactile and multi-modality communication service which can be provided over a single network slice with differentiated QoS requirements or multiple slices, the modalities may be video/audio data, sensor data and/or haptic data. Multi-modality data include input data from different kinds of devices or sensors or output data to different kinds of destinations required for the same task, service or application. Therefore, multi-modality outputs are generated based on the inputs from multiple sources that may be located within a single device or multiple devices.

### Network Slicing

Network slicing enables multiple logical networks on top of a shared physical network infrastructure (including radio, core and transport infrastructure). Network slicing enables partitioning of a physical network infrastructure into separate, end-to-end (E2E) instances/slices where each instance/slice is independent and has its own service requirements and characteristics [see e.g., 3GPP TR 23.640 "Study on Enhancement of Network Slicing (Release 16)"]. A UE can simultaneously use different network slices (up to 8) with differentiated QoS requirements. These independent E2E slices can provide, for example, (i) high throughput services via eMBB slices; (ii) latency- and reliability-dependent services via URLLC slices. Therefore, network slicing enables flexible utilization of the network infrastructure and resources depending on the network slice requirements/characteristics.

### Quality of Service (QoS)

The 5G QoS model is based on QoS Flows. The QoS Flow is the finest granularity of QoS differentiation in a PDU session. The QoS Flow may or may not require a guaranteed bit rate, which is defined in a corresponding QoS Flow profile that can be GBR or Non-GBR, respectively. Within a PDU session, a QoS Flow is identified by a QoS Flow ID (QFI). In addition, the 5G QoS model supports Reflective QoS that enables a UE to derive UL QoS rules from downlink packets, instead of having explicit signaling for UL QoS rules. Within the 5GS, a QoS Flow is controlled by the SMF and may be preconfigured, or established via the PDU Session Establishment or Session Modification procedure.

A QoS Flow may be characterized by: a QoS Flow profile (provided by SMF to the AN via AMF); one or more QoS rule(s) and optionally QoS Flow level QoS parameters such as 5G QoS Identifier (5QI), allocation and retention priority (ARP), guaranteed flow bit rate/maximum flow bit rate/maximum packet loss rate for UL and DL (can be provided by SMF to the UE via AMF or derived by UE applying Reflective QoS); and one or more UL and DL Packet Detection Rules (PDRs) (provided by SMF to UPF).

### Quality of Experience (QoE)

QoE is a measure of user experience both objectively and subjectively with a service or application. It covers both network-related/QoS measurements such as throughput, latency and application/service-related measurements such as responsiveness, end-user device capability, application/service content, user actions/interactions. For example, for a VR service, video resolution/codec, camera motions, user point of view, etc. are considered for some of the QoE metrics in addition to conventional QoS metrics.

The 5G QoE measurement is an application layer measurement that is configured by Operations, Administration and Management (OAM) for different service types such as streaming, VR, XR, Multimedia Broadcast and Multicast Service (MBMS). It includes (i) radio-related measurements (e.g., MDT procedure) to help the network evaluate and improve QoE; (ii) radio-related information such as mobility history or dual connectivity status; and (iii) per-slice measurements. As noted, the QoE measurements are configured by the OAM but can be triggered either by the CN (known as signaling-based procedure) or by the OAM (known as management-based procedure). The RAN may not be able to understand or make use of all QoE metrics. However, there can be a subset of the QoE measurements, such as for example buffer level, that the RAN can make use of. This subset of metrics is named as RAN-visible QoE metrics and has been discussed in 3GPP Rel-17. Also, the maximum number of simultaneous QoE measurement configurations for a UE is still under discussion in 3GPP. Currently, the configuration of QoE measurements between UE and RAN (in RRC_CONNECTED) is agreed to be identified by a RRC identifier, called MeasConfigAppLayerId [see 3GPP TS 38.890 "Study on NR QoE (Quality of Experience) management and optimizations for diverse services (Release 17)" and RP-2116761 "Status report for WI on NR QoE management and optimizations for diverse services"].

### Network Data Analytics Function (NWDAF)

The NWDAF is used for data collection and data analytics in the network. Certain analytics can be performed by a 5GS Network Function (NF) independently, a NWDAF instance specific to that analytic maybe collocated with the 5GS NF. The data utilized by the 5GS NF as input to analytics could also be made available to allow for the centralized NWDAF deployment option. 5GS Network Functions and OAM decide how to use the data analytics provided by NWDAF to improve the network performance.

NWDAF utilizes the existing service based interfaces to communicate with other 5GC Network Functions and OAM. A 5GC NF may expose the result of the data analytics to any consumer NF utilizing a service based interface [see 3GPP TR 23.700-91 "Study on Enablers for Network Automation for the 5G System (5GS); Phase 2 (Release 17)"].

### AI/ML Model Transfer (AMMT)

The use cases and the potential performance requirements for 5G system support of Artificial Intelligence (AI)/Machine Learning (ML) model distribution and transfer (download, upload, updates, etc.) are studied in 3GPP as a AI/ML model transfer (AMMT) study item [see 3GPP TR 22.864 "Study on Traffic Characteristics and Performance Requirements for AI/ML Model Transfer in 5GS (Release 18)"]. The study item also identifies traffic characteristics of AI/ML model distribution, transfer and training for various applications, e.g., video/speech recognition, robot control, automotive, other verticals. The aspects related to AI/ML operation splitting between AI/ML endpoints, AI/ML model/data distribution and sharing over 5G system, and Distributed/Federated Learning over 5G system are addressed.

The AI/ML operation/model is split into multiple parts according to the current task and environment. The intention is to offload computation-intensive, energy-intensive parts to network endpoints, while leaving privacy-sensitive and delay-sensitive parts at the end device.

Multi-functional mobile terminals might need to switch the AI/ML model in response to task and environment variations. The condition of adaptive model selection is that the models to be selected are available for the mobile device and the models are selected based on the device constraints/capability.

In the distributed/federated learning, a cloud server trains a global model by aggregating local models partially-trained by each end device. Within each training iteration, a UE performs the training based on the model downloaded from the AI server using the local training data. Then the UE reports interim training results to the cloud server via 5G UL channels. The server aggregates the interim training results from the UEs and updates the global model. The updated global model is then distributed back to the UEs and the UEs can perform the training for the next iteration.

The multiple modality inputs may be provided by a single device (UE with different sensors) or multiple devices (such as a first device integrated and external cameras and microphones for video and audio data, a second device for ambient sensing and a third for haptic information). The multiple modality service inputs are transmitted from one or multiple application servers to one or multiple UEs, or vice versa, at practically the same time to enable integrated processing. Even a relatively small time difference may degrade the performance and experience of a tactile and multi-modality communication service.

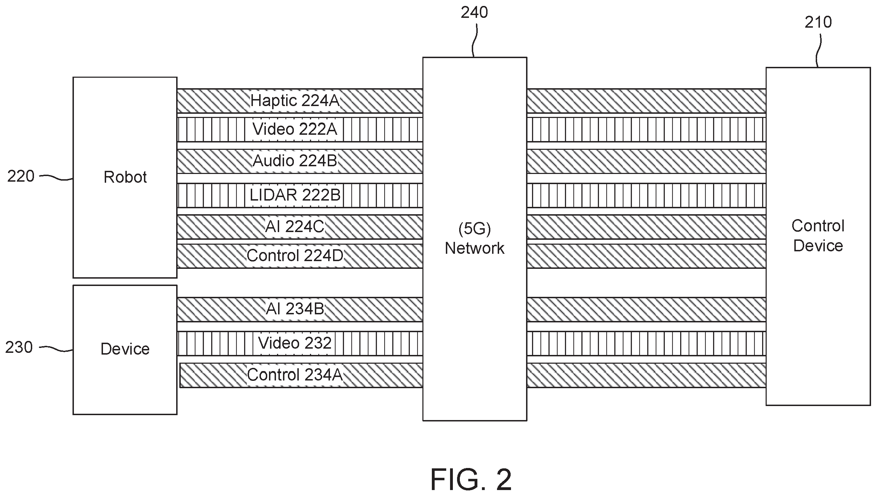

As the multi-modality inputs can be provided by different devices in a multi-modality service, the input data from these multiple resources may have different characteristics or QoS/QoE requirements such as sampling rate/transmission frequency, latency, image/video resolution, throughput and reliability. For example, in an augmented robotic telepresence use case illustrated in FIG. 2, a human operator can control a robot 220 or other machinery to perform remote operations. In such a use case, (i) the robot 220 can provide video, audio, haptic data and LIDAR data, (ii) another device(s) 230 such as a camera(s) or any sensor(s) can provide additional information on the environment to enhance the remote operator's perception of the real environment, and (iii) the operator interacts with a control device 210 that sends control signals to the robot and the camera(s) to perform the operation. These signals can be sent via a network 240, e.g. a 5G network. Depending on a considered scenario, these devices can exist behind a gateway and/or have on-device AI capabilities that require another set of control signals from/to the remote operator to/from the robot and surrounding sensing equipment.

In such an augmented robotic telepresence, the transmission of the sensory data, typically requiring much bandwidth, from the robot and surrounding sensing equipment to the remote operator's station and the typically low-latency data in the opposite direction represent the multi-modal communication. This transmission should take into account different QoS/QoE requirements for each of the traffic streams/applications between the robot and the remote operator as well as between the surrounding sensing equipment and the remote operator. As shown in FIG. 2, for the robot 220, 2 eMBB slices are considered (a first 222A for the Video stream, and a second 222B for the LIDAR sensor) simultaneously with 4 URLLC slices (a first 224A for the haptic stream, a second 224B for the audio stream, a third 224C for AI-related control signals, and a fourth 224D for the control of the robot). For the other device 230, in this example a camera, one eMBB slice 232 (for the video stream) and 2 URLLC slices (one 234A for the control of the camera zooming and tilting, and another one 234B for AI-related control signals) are considered.

As noted in the given augmented robotic telepresence use case, the multiple modality inputs may be provided by a single device or multiple devices. Meeting the QoS/QoE requirements for one device and one slice does not necessarily mean meeting the QoE requirements of the compound E2E multi-modality service. Therefore, to support the compound E2E tactile and multi-modality communication services, the multi-modality service flows from different UEs should be identified, and the parallel transmission for different multi-modality service flows should be coordinated.

To clarify this with the use case illustrated in FIG. 2, (i) eMBB slice and URLLC slice from the same UE (robot or external camera) would require identification and coordination (eMBB <-> URLLC) and (ii) eMBB and URLLC slices from across different UEs (robot and external camera) would require identification and coordination (eMBB <-> eMBB; eMBB <-> URLLC; URLLC <-> URLLC).

Currently, 3GPP system can guarantee a dedicated performance such as E2E latency or throughput for a single UE only. Network slice selection is static where the same network slice is selected for a given application or service at all times with the assumption that one UE finishes the task. Although a UE can simultaneously use different network slices (up to 8) with differentiated QoS requirements, the assumption that one UE finishes the task still exists. Hence, supporting simultaneous use of multiple network slices for a single UE and per-slice QoE measurements would not be enough to establish a coordination/collaboration mechanism between multiple UE devices to conduct the multi-modality service along with its QoE requirements. Therefore, it will be appreciated that supporting a collaboration of multiple UE devices that utilize various network slices to conduct a task is difficult with the current 3GPP systems. Moreover, having on-device AI capabilities also requires coordination among multiple UE devices to determine whether or not to consider output/model parameter update of that specific AI model for the compound multi-modal service.

### Overview

The present principles consider a scenario where multiple UEs, that, as described with reference to FIG. 2, each can include a plurality of parts (e.g. camera, microphone and so on), can collaborate to conduct a multi-modality service, where a UE may use multiple network slices simultaneously (e.g. in parallel), and where network slices can be used by a single UE or across more than one UE either interworking directly or indirectly e.g., via a gateway. Because of this, different QoS/QoE requirements may be needed for the slices. Therefore, the network slices involved are grouped to form a set with the goal of being able to guarantee the QoE requirements of the composite E2E multi-modality service. Herein, this grouping is considered as an identification of the multi-modality service and related service flows and/or PDU sessions.

As the performance of a multi-modality service depends on the performance of multiple UE devices and associated network slices, there is a dependency between different network slices as well as within a single network slice such as URLLC or eMBB slice that is used by different UE devices. Although the current 3GPP system can map multiple sessions into one slice/service type (SST) and use the slice differentiator (SD) to customize the QoS of each of the session, there can be inter-dependencies. For example, different sessions for the same UE can be inter-dependent, e.g., an action on one session can be dependent upon another session. As another example, different sessions involving different UE devices either directly or via a gateway can be inter-dependent, e.g., an action on one UE can be dependent on an action from another UE device(s) that can be located behind a gateway. These dependencies are not addressed in the current 3GPP specifications. Moreover, in the case of devices having AI capabilities, there is no current mechanism to coordinate input/output of the AI models employed on different UE devices contributing to the same E2E multi-modal service. The present principles provide Network Slice Selection Function (NSSF)-based and application function (AF)-based coordination among multiple UE devices. The NSSF-based and AF-based solutions use multi-modality service identification information to coordinate multiple UE devices and associated slices in order to meet jointly the QoE requirement of the compound E2E multi-modality service.

### Multi-modal service identification

As described in 3GPP TS 23.501, "System Architecture for the 5G System (5GS); Stage 2 (Release 17)," the 5GS supports network slicing. A network slice is identified by an S-NSSAI, which includes a SST and a SD, where a SD in a S-NSSAI is optional. A set of one or more S-NSSAIs is called a NSSAI. During the UE registration procedure, the UE informs the AMF regarding its requested NSSAI that is defined by a list of requested S-NSSAIs with related SSTs and SDs. The requested S-NSSAIs can be used by different applications that require different QoS profiles. The applications and corresponding application-specific traffic may be identified by a combination of DNN and, optionally, S-NSSAI or an AF-Service-Identifier, as described in 3GPP TS 23.501. Moreover, Subscription Permanent Identifier (SUPI)/Globally Unique Temporary Identifier (GUTI)/Generic Public Subscription Identifier (GPSI) can be applied to identify the individual UE, or an External Group Identifier can be applied to identify a group of UEs. As more than one application can be used by either a single UE or multiple UEs for the same multi-modal service, the currently available identifiers used for an application, application-specific traffic, a network slice and/or UE/group of UEs are not enough to identify a multi-modal service and corresponding network slices/PDU sessions as well as UEs.

Therefore, in one embodiment, a new identifier, named "multi-modal service ID" (MMID) is used to identify the network slices and UEs involved in a compound E2E multi-modal service. As (i) not all the applications available/running in a UE have to be part of the same multi-modal service; (ii) applications available/running in a UE may be part of different multi-modal services; and (iii) different network slice instances may have slice-specific PDU sessions using the same DNN, the UE may (preferably shall) include the "multi-modal service ID" for each S-NSSAI in the requested NSSAI during the UE registration procedure.

In another embodiment, a "compound slice," "super-slice" or "hyper-slice" (that will be used hereafter) is proposed to stitch, concatenate or group already defined slice types (e.g., eMBB, URLLC and V2X) depending on the multi-modal service requirements. Such a "hyper-slice" may be defined as a fixed slice, but it may also be built dynamically based on the multi-modal service QoE monitoring. The newly generated network slice may be used in case the slice isolation is not a requirement or the slices that are going to be stitched are not mutually exclusive. As a way of example, the operator may configure network slices that are allowed to be stitched, using the same Slice Differentiator (SD) or any other indicator that can be used by the system (e.g., the NSSF) to determine whether a network slice can be part of a hyper/super slice.

The "hyper-slice" can be explicitly requested by the UE, e.g., using a combined identifier, that can be generated, for instance by OR-ing SSTs for defined slices, and using the result as a mask to obtain the relevant slices at the AMF or NSSF.

For example, a UE can generate a slice mask that represents the considered SSTs, and network can make use of the generated slice mask to understand whether a slice type is part of the hyper-slice or not.

Alternatively, the network can derive the "hyper-slice" by combining a number of Network Slices, based on network analytics, as will be described with reference to the embodiment with AI on the network/remote operator side.

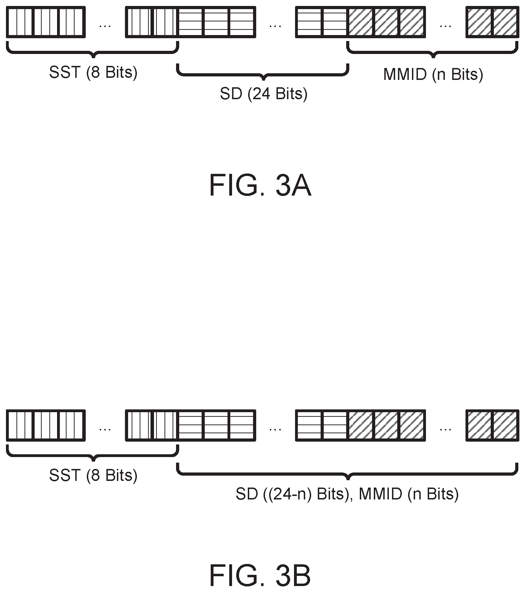

The multi-modal service ID, MMID, for each S-NSSAI can be included in a number of ways, as illustrated in FIGS. 3A and 3B.

FIG. 3A illustrates a first way of including an additional identifier for the (SST, SD) tuple such as (SST, SD, MMID) where MMID represents the "multi-modal service ID". In an example, the SST is 8 bits, the SD 24 bits and the MMID n bits. Different multi-modal services can have pre-defined fields for MMID as it has been used for SST and SD.

FIG. 3B illustrates a second way, reserving part of SD field to indicate MMID as similar to the proposal given for Slicing Group ID in 3GPP TR 23.640. This can be interpreted as (SST, [SD, MMID]). As can be seen, the SST is 8 bits, the MMID n bits, and the SD 24-n bits.

The "hyper-slice" can be identified by a reserved SD field where each multi-modal service has a single SD identifier. Based on the specific SD identifier, different SSTs are stitched to the multi-modal service. For example, the requested eMBB and URLLC slices will have the same SD identifier such as for eMBB (SST=eMBB, SD=X) and for URLLC (SST=URLLC, SD=X) where X is the designated SD field that is used to stitch different slices to the multi-modal service.

In case the applications available/running in a UE are part of multiple multi-modal services, e.g., in case a camera streaming from a UE is used for object-detection in one multi-modal service and for positioning in another multi-modal service, the "multi-modal service ID" may include the list of multi-modal services.

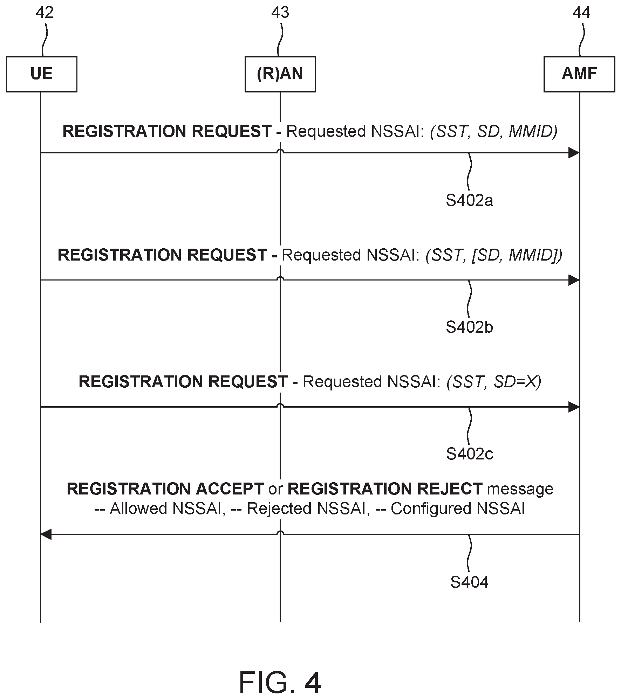

FIG. 4 illustrates the message flow to signal the proposed "multi-modal service ID" information in the network.

In step S402, a UE 42 sends a REGISTRATION REQUEST message via an access network 43 to an access management node 44, e.g. AMF, to indicate that the S-NSSAI(s) in the requested NSSAI is either part of a specific multi-modal service/a specific set of multi-modal services or part of a "hyper-slice". For illustrational purposes, step S402 is illustrated as three variant steps, step S402a-S402c, one for each of the following embodiments.

In a first embodiment, in step S402a, the MMID is included as an additional identifier.

In a second embodiment, in step S402b, the MMID is included in the SD field.

In a third embodiment, in step S402c, a designated SD field (represented by X) is used to stitch an SST or a set of SSTs to the "hyper-slice".

AMF verifies whether the requested NSSAI is included in the list of allowed NSSAIs part of the UE subscription or not, and responds, in step S404, via the access network, to the UE with a message indicating REGISTRATION ACCEPT or REGISTRATION REJECT, the message including the relevant NSSAI information, e.g., allowed NSSAI, rejected NSSAI, and configured NSSAI.

### Coordination of multiple UE devices

Coordination of multiple UE devices will be described in two embodiments, one with AI capabilities only on the network and/or remote operator side, one with AI capabilities on the UEs as well.

Embodiment with AI capabilities only on the network/remote operator side

As described in 3GPP TS 23.501, the Network Slice Selection Function (NSSF) supports (i) selecting the set of network slice instances serving the UE, (ii) determining and mapping the allowed NSSAI/subscribed S-NSSAIs, (iii) determining the configured NSSAI, (iv) determining the AMF set to serve the UE (by querying the Network Repository Function (NRF), if needed), and (v) restriction of network slice instances based on NWDAF analytics. From already described functionalities of the NSSF, it can be seen that the NSSF can make use of the NWDAF, can query the NRF and can determine an AMF set to serve the UE. In case of the multi-modal service, the NSSF can make use of the similar functionalities not only for a single UE, but for all the UEs involved in the compound multi-modal service, jointly. In one embodiment, the "multi-modal service ID" or "super/hyper-slice" proposed in section "Multi-modal service identification" is used by NSSF to identify (i) the requested multi-modal service along with its QoE requirement, (ii) the UEs involved in the same multi-modal service, and (iii) required network slices along with their specific QoS requirements. Accordingly, in this embodiment, the NSSF creates a group for the UEs that are part of the multi-modal service, herein named "multi-modality UE group," and associates the requested S-NSSAIs from the UEs part of the "multi-modality UE group" with the same service.

In another embodiment, the NWDAF gathers analytics/statistics for the multi-modal services and provides interdependencies among the members of the "multi-modality UE group" based on the QoS/QoE of their network slices/services/applications contributing to the multi-modal service, herein named "multi-modality QoE".

In another embodiment, the NSSF makes use of the NWDAF analytics on the multi-modality service, multi-modality QoE and interdependencies among the members of the multi-modality UE group to determine the slice/service/application specific QoS/QoE levels as well as QoE measurement configurations.

Apart from the proposed NSSF-based solution, another embodiment uses the same functionalities for AMF/SMF. As the registration request/update message is first received by the AMF, the "multi-modal service ID" or "hyper-slice" can be used by the AMF to identify (i) the requested multi-modal service along with its QoE requirement, (ii) the UEs involved in the same multi-modal service, and (iii) required network slices along with their specific QoS requirements. Then, the SMF can make use of NWDAF analytics on the multi-modality service, multi-modality QoE and interdependencies among the members of the multi-modality UE group to determine the slice/service/application specific QoS/QoE levels as well as QoE measurement configurations. This would also enable dynamic updates for UEs that establish new PDU Sessions, and also new PDU sessions triggered by a single UE that may change the nature of the multi-modality service that is being provided to the end user.

According to the present principles, the identification of specific QoS/QoE requirements can be handled as follows. The network may support a set of specific multi-modal services which can be identified by the given "multi-modal service ID" or "hyper-slice". Each multi-modal service can have a pre-defined QoE requirement, named "multi-modality QoE". The "multi-modality QoE" is made up of different QoS/QoE requirements for the network slices/services/applications contributing to the multi-modal service. The "multi-modality QoE" represents interdependencies among not only the network slices/services/applications used by the same UE but also all other UEs that are part of the "multi-modality UE group". For example, delay on getting data from one of the UEs/applications or getting a low-quality data due to low data rate performance may affect the performance/experience on another service/application. Hence, the overall performance of the multi-modal service will not achieve the required QoE. Therefore, such interdependencies are determined by NWDAF based on the considered "multi-modality QoE". Then, either (i) the NSSF makes use of this information to jointly configure network slices or (ii) AMF/SMF makes use of this information to configure jointly QoS/PDU sessions to provide the multi-modal service. Such configuration includes determining the AMF set to be used to serve all the UEs involved in the multi-modal service, updating "multi-modal UE group" in case some UEs (or sensors/devices) involved in the multi-modal service may not be the part of the group due to mobility and mapping of allowed/configured NSSAI to the subscribed S-NSSAIs.

It is noted that this embodiment, with AI capabilities only on the network side, for example could correspond to FIG. 2 without AI 224C and 234B.

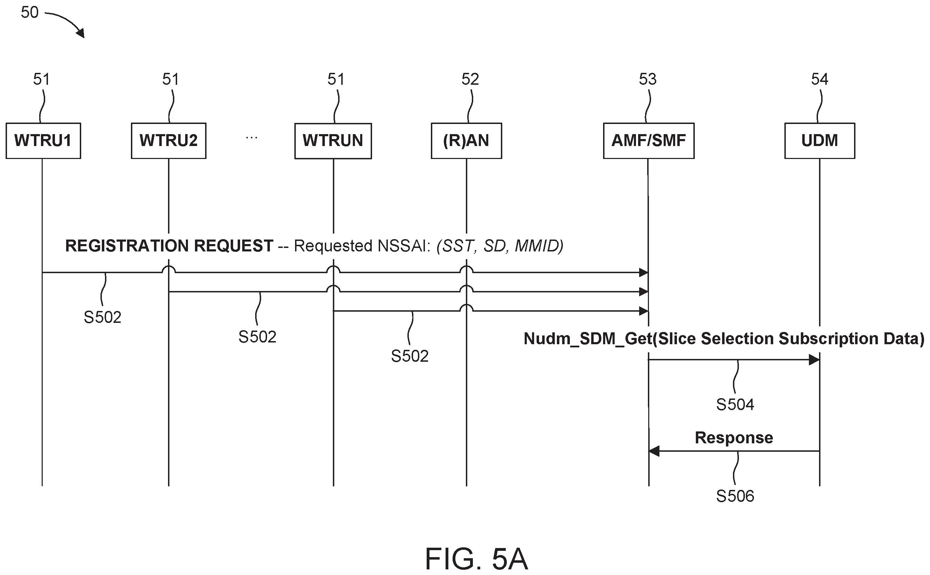

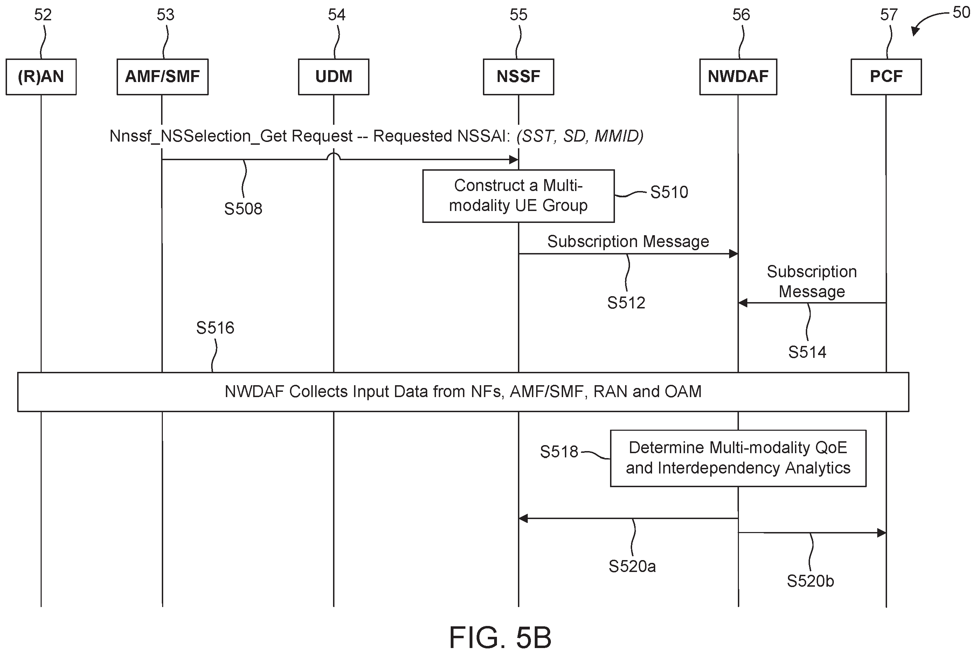

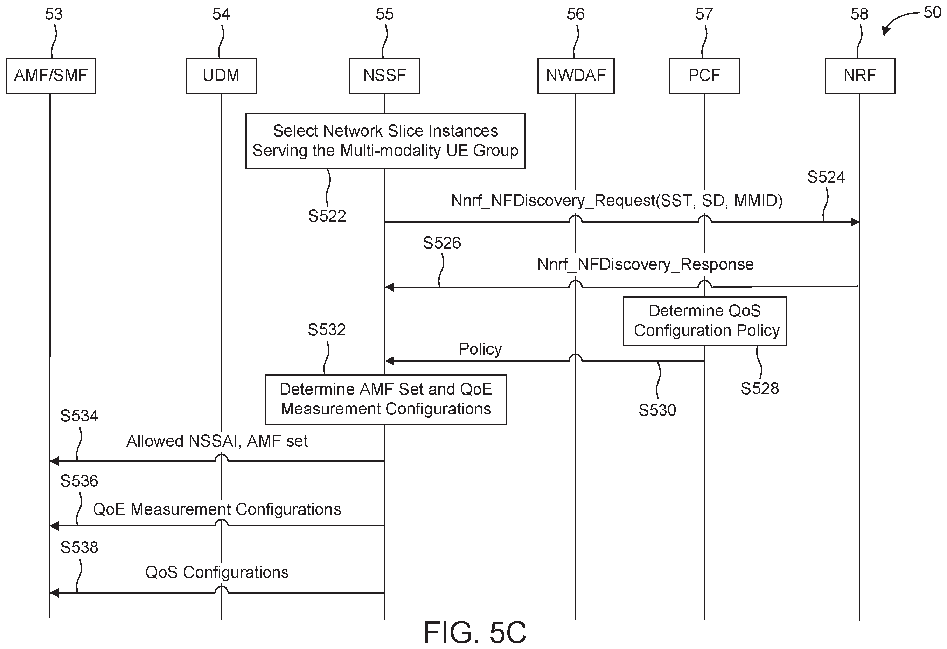

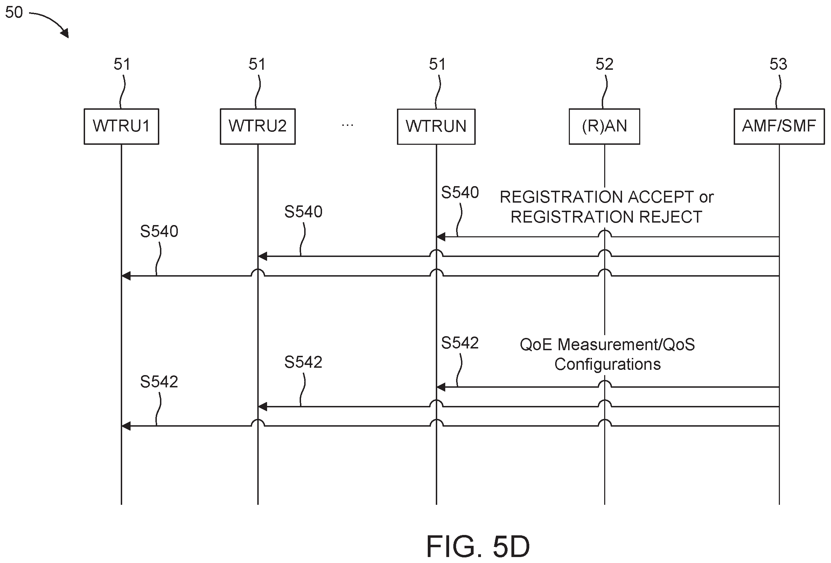

FIG. 5, made up of FIGS. 5A-5D, is an example sequence flow diagram illustrating a method for coordinating network slices for compound E2E multi-modal service according to an embodiment. The figure illustrates a network 50 including N UEs 51 (WTRU1-WTRUN), an access network, (R)AN, 52, an AMF/SMF 53, a UDM 54, a NSSF 55, A NWDAF 56, a Policy Control Function (PCF) 57, and a NRF 58. As an example, the MMID can be included in a NSSAI as illustrated in FIG. 3A, but it will be understood that the MMID can alternatively be included as illustrated in FIG. 3B and in step S402c.

The network 50 has a set of specific multi-modality services and each multi-modality service has a pre-defined multi-modality QoE.

In step S502, WTRU1, WTRU2, ..., WTRUN 51, where N represents the number of users considered in this diagram, send, to the AMF 53, REGISTRATION REQUEST messages with the multi-modality service ID, MMID, for each S-NSSAI, as already described herein in step S402.

In case the AMF 53 does not have a UE's slice subscription information, in step S504, it queries the UDM 54 for this information by sending a message, as is known in the art. When there is a multi-modality service request, having the UE's slice subscription information is not enough for the AMF 53 to determine whether or not to serve the UE 51 as the multi-modality service may have involvement of multiple UEs with interdependencies between the performances of each UE.

In case the AMF 53 queried the UDM 54 in step S504, the UDM 54 sends a response including requested information in step S506.

In step S508, the AMF 53 sends to the NSSF 55 a message including the multi-modality service ID to verify the allowed NSSAI(s) to serve the UE.

In step S510, based on the received identity information for each S-NSSAI with the multi-modality service ID, the NSSF 55 generates a multi-modality UE group. In case the group already exists, the NSSF can alternatively update the existing multi-modality UE group.

In step S512, the NSSF 55 sends a subscription message to the NWDAF 56 to receive the multi-modality QoE and interdependency analytics. The NSSF may use the SD to determine whether a Network Slice may be part of a super/hyper slice, e.g., a S-NSSSI with a particular SD may signal network slices that are neither mutually exclusive nor require isolation.

In step S514, the PCF 57 sends a similar subscription message to the NWDAF 56. It is noted that the subscription can be part of the AM/SM policy association establishment or modification procedure initiated by the AMF/SMF 53. The NWDAF 56 has analytics IDs that are exposed to other NFs via Nnf_eventExposure, making it possible for other NFs, including the PCF, to subscribe to the analytics.

In step S516, the NWDAF 56 collects input data from relevant other 5GC NFs, AMF 53 and (R)AN 52 in case either the requested multi-modal service has already been used or is currently being used by UE(s) 51. More specifically, the collected data from RAN 52 is on UE QoE measurements.

In step S518, the NWDAF 56 determines the multi-modality QoE predictions and interdependency analytics and, in steps S520a and S520b, send message including these analytics to the NSSF 55 and the PCF 57, respectively. It is noted that the QoE measurement is an application layer measurement that is configured by OAM, and the NWDAF 56 can utilize the existing service-based interfaces to communicate with OAM. It is assumed that the NWDAF 56 has preliminary information on multi-modality QoE configuration provided by OAM, and the NWDAF 56 utilizes this information to determine multi-modality QoE predictions and interdependency analytics in step S518.

In step S522, the NSSF 55 selects network slice instances serving the multi-modality UE group and determines/configures allowed NSSAIs along with their 5QI.

In step S524, the NSSF 55 sends a NF discovery request message to the NRF 58 in order to determine the list of candidate AMF(s) that can serve the requested S-NSSAI(s) for the multi-modality service.

In step S526, the NRF 58 responds by sending a message to the NSSF 55 with the list of candidate AMF(s).

In step S528, the PCF 57 determines the policy for QoS configurations for each member of the multi-modality UE group and, in step S530, sends this policy to the NSSF 55.

In step S532, the NSSF 55 determines the AMF set to be used to serve the multi-modality UE group, and the applicable access type information for each allowed NSSAI for each member of the multi-modality UE group. The NSSF 55 also determines the QoE measurement configurations for each member of the multi-modality UE group based on the QoS configurations provided by PCF 57.

In step S534, the NSSF 55 sends a message, for example a Nnssf_NSselection_GetResponse message, to the AMF/SMF 53 with the allowed NSSAIs as well as target AMF set.

In step S536, the NSSF 55 sends a message including information about the QoE measurement configurations to the AMF/SMF 53.

In step S538, the PCF 57 sends a message including information about the QoS configurations to the AMF/SMF 53.

In step S540, the AMF 53 responds to UEs' registration requests by respectively sending, via the access network 52, messages (Registration accept or Registration reject) as described with reference to FIG. 4. In case the registration is accepted, in step S542, the AMF 53 also sends message including information about the QoE measurement/QoS configurations.

In case the described AMF/SMF-based embodiment is used rather than the NSSF-based embodiment, the functionalities defined for the NSSF on (i) constructing multi-modality UE group, (ii) subscribing to multi-modality QoE and interdependency analytics at NWDAF, and (iii) QoE measurement configuration for each member of the multi-modality UE group are handled by the AMF/SMF.

It is noted that either the NSSF or the AMF/SMF may determine the QoE measurement configurations for each member of the multi-modality UE group. In order for the NSSF or the AMF/SMF to do this, they use QoE measurement reports. UE application layer generates the QoE reports and sends it to the UE AS layer that sends the QoE reports to the NG-RAN node. Then, the NG-RAN node transmits the QoE reports to a configured final destination, such as a Measurement Collection Entity (MCE). According to the present principles, the MCE can be (i) the NWDAF, (ii) the OAM, or (iii) any other AF/NF that provides the measurements/statistics to the NWDAF. Then, the NWDAF determines the multi-modality QoE predictions and interdependency analytics, in step S518.

The NWDAF can perform these predictions/analytics as follows, e.g., to provide the analytics to other NFs that have subscribed to them. The NWDAF can make use of the existing solutions described in 3GPP TR 23.700-91 "Study on Enablers for Network Automation for the 5G System (5GS); Phase 2 (Release 17)," such as redundant transmission experience statistics, session inactivity timer predictions, observed service experience analytics, etc. along with multi-modality UE group ID. Then, the NWDAF can predict the multi-modality QoE (based on the predictions for each service/application that contributes to the multi-modality service) and determine interdependencies among the UEs/applications/services contributing to the multi-modality service.

Based on the NWDAF statistics and predictions, either (i) the NSSF (re)configures QoE measurements based on QoS configurations provided by PCF and provides them to the AMF/SMF, or (ii) the AMF/SMF (re)configures QoE measurements based on QoS configurations provided by PCF. Then, the (re)configured QoE measurement/QoS is signalled to the UE via using existing mechanisms, such as explicit NAS signalling or explicit RRC signalling.

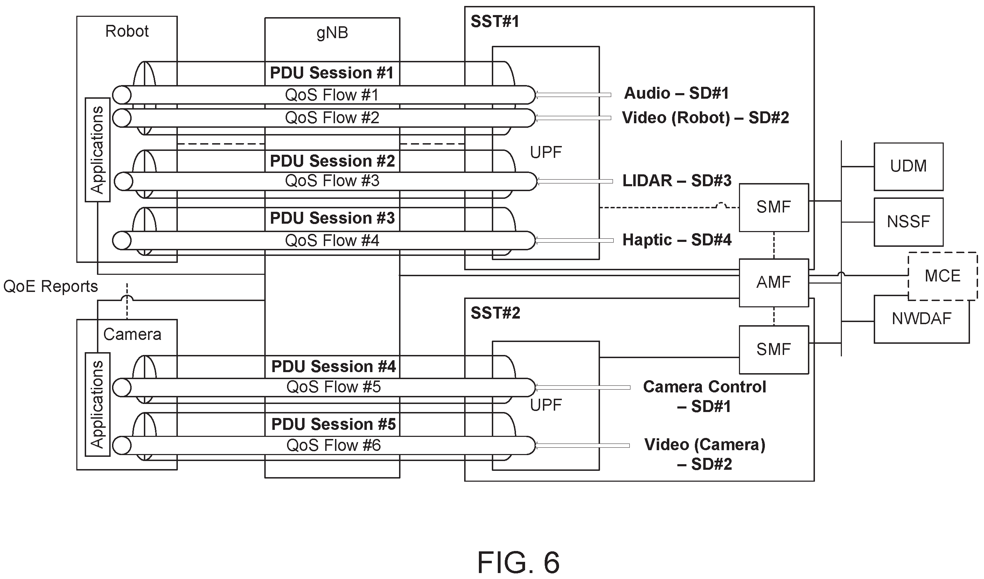

FIG. 6 illustrates an example of UE-slice-multi-modality coordination for the example use case on augmented robotic telepresence. SST/SD pairs are used to represent different network slices/services/applications that are part of the compound multi-modal service. When the network wants to control/modify the UE usage of the allowed S-NSSAIs for the multi-modality service or when there is an update in the multi-modality UE group due to mobility, the network updates the UE with network slice selection policy (NSSP) as part of the UE route selection policy (URSP) rules, as described in 3GPP TS 23.501.

The figure shows in more detail what is shown in FIG. 2, for example how different flows can pass through different PDU sessions, while a plurality of flows can share a PDU session, as for example is the case for the audio and the video from the robot. The figure also shows network functions involved in the method illustrated in FIG. 5.

### Embodiment with on-device AI capabilities

In this embodiment, it is considered that not only the network but also UE devices have AI capabilities. Therefore, once the multi-modality UE group is created and QoS/QoE of the network slices/services/applications contributing to the multi-modal service are identified for the devices belong to the multi-modality UE group, each device autonomously or collaboratively optimizes (predict) QoE of the services/applications running in the device that affect the compound E2E multi-modal service. To enable coordination/collaboration among the devices that have AI capabilities and belong to the multi-modality UE group, this embodiment uses a SST/SD pair named "Collaborative AI" which may require a high throughput (for AI/ML model transfer/update) and/or low latency (to provide device/application specific changes that may affect the multi-modality service QoE or to provide AI/ML model parameters). The new Collaborative AI SST/SD pair is configured to include Network Slices that neither require isolation from one another nor are mutually exclusive.

The "Collaborative AI" SST/SD pair can be used to provide AI/ML model updates from the network to the UE devices, or, vice versa, from the UE devices to the network in case a federated learning-based AI/ML approach is employed. Accordingly, the "Collaborative AI" SST/SD pair may require a high throughput (for AI/ML model transfer/update) and/or low latency (for the case of federated learning).

The "Collaborative AI" SST/SD pair can also be used to inform the network (SMF/NSSF as it provides coordination among multi-modality UE group, as described in the embodiment with AI capabilities on the network/remote operator side) regarding any changes on the UE side such as the change of a video codec, video resolution, data granularity/frame rate, QoS requirement of a specific traffic type, zoom level, tilt level, etc. that is applied based on the UE's own AI/ML-based evaluation. Such information can enable the network (coordinator of multiple UE devices for the same multi-modal service) to react accordingly. Therefore, the "Collaborative AI" SST/SD pair preferably should provide low latency in order to provide UE's predictions such as trajectory/mobility predictions, QoE predictions for the applications running in the UE or device/application specific changes that may affect the multi-modality service QoE.

The "Collaborative AI" SST/SD pair can be used to indicate that video resolution of the application running on the surrounding sensing equipment is increased up to a level where the robot either does not need to stream the video traffic with high quality or does not need to stream the video traffic at all, without this degrading the E2E compound multi-modality service QoE. In another instance, the "Collaborative AI" SST/SD pair can be used to indicate the UE's own trajectory predictions, for example that the UE may shortly move into/out of a different geographical area. Therefore, the network could re-configure the network slice/QoS/PDU sessions/DRB allocation accordingly. By doing this, the network could use its resources efficiently (enhanced energy/resource efficiency) as well as be prepared for upcoming events that may affect QoS/QoE (mobility optimization/robustness).

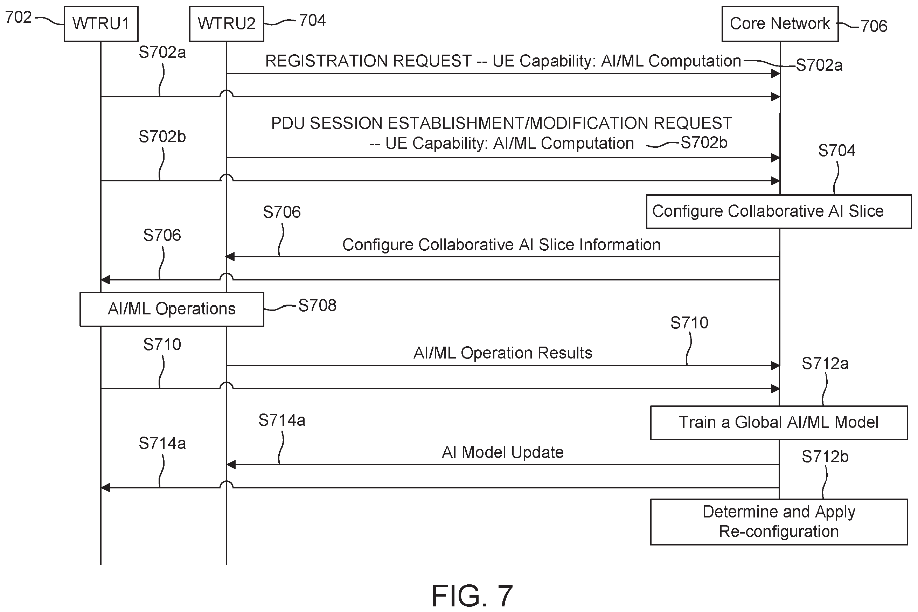

FIG. 7 is a sequence diagram illustrating a message flow in a network involved in a compound E2E multi-modal service according to an embodiment. The network 700 includes a core network 706, for example including a NSSF (NSSF/UDM/NWDAF/PCF) and an AMF/SMF and multiple UEs with on-device AI capabilities illustrated by WTRU1 702 and WTRU2 704. Typically, the network 700 includes an access network, but it is not shown for illustrative purposes. Communication between the UEs and the NSSF can pass via the access network and either the AMF that forwards registration request/update messages or the SMF that forwards PDU session establishment/modification messages in both directions. It will be understood that where the description makes reference to messages to or from the core network, this can mean to or from a node in the core network. The multi-modality QoE and interdependencies among the members of the multi-modality UE group may be determined as previously described in the description of the embodiment with AI capabilities on the network/remote operator side.

In step S702a, the UEs capable of supporting performing AI/ML operations sends a request message to the core network 706. The UE can indicate the capability as "AI/ML operations supported" in a 5GMM capability IE of the REGISTRATION REQUEST/UPDATE message or similar. The message can have the AI/ML bit to "AI/ML operations supported" set in the 5GMM capability IE.

Alternatively, in step S702b, the UE can send PDU SESSION ESTABLISHMENT/MODIFICATION REQEUST message or similar including an indication of its 5GSM capability IE. The message can have the AI/ML bit to "AI/ML operations supported" set in the 5GSM capability IE.

The UE may request network slices that are part of a collaborative AI group by providing a Collaborative AI SST/SD pair.

Based on the UE's AI/ML capability information, in step S704, the network 706 configures a "Collaborative AI" slice (SST/SD pair), which includes establishing PDU sessions for collaborative AI slice. In step S706, the network 706 provides (sends) the UE with corresponding configuration information to perform AI/ML operations.

In one embodiment, these operations are to locally train AI/ML models and provide model/parameter updates to the network.

In another embodiment, these operations are to predict UE behaviour such as trajectory, load, CPU usage etc. or to modify device/application specific parameters/specifications that may affect the multi-modality service QoE.

In step S708, one or more of the UEs perform AI/ML operations.

In step S710, one or more of the UEs send messages with results from the AI/ML operations to the network. The UEs use the Collaborative AI slice for to send the messages.

If the UE conducts local AI/ML model training, the message can include AI/ML model/parameter updates. If the UE conducts device/application specific AI/ML operations, the message can include predictions or device/application specific parameter/specification changes.

In step S712a, the network can, in response to a message or messages sent in step S710, aggregate the AI/ML model/parameter provided by UEs to update the global AI/ML model. Based on the AI/ML operation at the network side, the network can, in step S714a, send messages with the model/parameters of the re-trained global model to the UEs.

In step S712b, the network can determine a need for re-configuration of slices/QoS/PDU sessions/DRB allocation based on the UE predictions and/or device/application specific changes that may affect the multi-modality service QoE. The need can be determined as described in steps S528-S530 in FIG. 5C.

The network can also configure/modify slices/QoS/PDU sessions/DRB allocation to provide the requirements of the multi-modality service QoE.

### Conclusion

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

The foregoing embodiments are discussed, for simplicity, with regard to the terminology and structure of infrared capable devices, i.e., infrared emitters and receivers. However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only, and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein *supra* and *infra* are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs). A processor in association with software may be used to implement a radio frequency transceiver for use in a WTRU, UE, terminal, base station, RNC, or any host computer.

Variations of the method, apparatus and system provided above are possible without departing from the scope of the invention. In view of the wide variety of embodiments that can be applied, it should be understood that the illustrated embodiments are examples only, and should not be taken as limiting the scope of the following claims. For instance, the embodiments provided herein include handheld devices, which may include or be utilized with any appropriate voltage source, such as a battery and the like, providing any appropriate voltage.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect. In addition, use of the terms "means for" in any claim is intended to invoke 35 U.S.C. §112, ¶ 6 or means-plus-function claim format, and any claim without the terms "means for" is not so intended.

## Claims

1. A wireless transmit/receive unit, WTRU, comprising:
memory storing processor-executable program instructions; and
at least one hardware processor configured to execute the program instructions to:
transmit, to a network node, a registration request message comprising a requested network slice selection assistance information, NSSAI, including one or more requested single network slice selection assistance information, S-NSSAls, and, for each requested S-NSSAI, a multi-modal service identifier for identifying the network slices and WTRUs involved in a compound end-to-end multi-modal service; and
receive, in response to the registration request message, a registration accept message including information indicating an allowed NSSAI or a configured NSSAI.

2. The WTRU of claim 1, wherein the multi-modal service identifier is included as an additional identifier for a tuple comprising a slice/service type, SST, and a slice differentiator, SD.

3. The WTRU of claim 1, wherein the multi-modal service identifier is included in a slice differentiator, SD, field of the requested S-NSSAI.

4. The WTRU of claim 1, wherein the multi-modal service identifier comprises identifiers of a plurality of multi-modal services.

5. The WTRU of any one of claims 1-4, wherein the requested NSSAI includes at least two requested S-NSSAIs.

6. The WTRU of claim 5, wherein the at least two requested S-NSSAIs comprise different slice/service types, SSTs.

7. The WTRU of claim 5, wherein at least two of the requested S-NSSAIs comprise the same slice/service type, SST, and different slice differentiators, SDs.

8. The WTRU of any one of claims 1-7, wherein the at least one hardware processor is further configured to receive information indicative of a Quality of Experience, QoE, measurement configuration.

9. The WTRU of claim 8, wherein the at least one hardware processor is further configured to generate a QoE report in accordance with the QoE measurement configuration and transmit the QoE report towards a network node.

10. The WTRU of any one of claims 1-9, wherein the at least one hardware processor is further configured to receive an update of a network slice selection policy, NSSP, as part of UE route selection policy, URSP, rules for the multi-modal service.

11. A method performed by a network node, the method comprising:
receiving a first request for a first set of network slices requested by a first Wireless Transmit/Receive Unit, WTRU, the first request associated with a service identifier;
receiving a second request for a second set of network slices requested by a second WTRU, the second request associated with the service identifier;
determining a set of instances corresponding to the requested network slices; and
transmitting, to at least one further network node, information indicative of the instances respectively corresponding to the network slices of the first and second sets of network slices.

12. The method of claim 11, further comprising creating a multi-modality WTRU group comprising the first and second WTRUs, or updating a multi-modality WTRU group to comprise the second WTRU.

13. The method of claim 12, further comprising:
transmitting, to a data analysis node, a message indicating a request for Quality of Experience, QoE, and interdependency analytics for a set of network slices including the first and second sets of network slices; and
receiving, from the data analysis node, QoE predictions and the interdependency analytics.

14. The method of any one of claims 11-13, further comprising transmitting, to the at least one further network node, information indicative of configurations for measuring Quality of Experience, QoE.

15. The method of any one of claims 11-14, wherein each of the first and second requests comprises a requested NSSAI including one or more requested S-NSSAIs and, for each requested S-NSSAI, the service identifier
